Europäisches Patentamt

European Patent Office

Office européen des brevets

(11) Publication number: **0 423 614 A1**

# EUROPEAN PATENT APPLICATION

(21) Application number: **90119451.4**

(22) Date of filing: **11.10.90**

(51) Int. Cl.5: **H01R 39/04**

(30) Priority: **13.10.89 US 421233**

(43) Date of publication of application:
**24.04.91 Bulletin 91/17**

(84) Designated Contracting States:
**BE CH DE ES FR GB IT LI SE**

(71) Applicant: **AEG WESTINGHOUSE TRANSPORTATION SYSTEMS, INC.**
**1501 Lebanon Church Road**
**Pittsburgh, PA 15236-1491(US)**

(72) Inventor: **Appleby, Edmund C.**
**284 Barclay Avenue**
**Pittsburgh, P.A. 15 221(US)**

(74) Representative: **Vogl, Leo, Dipl.-Ing.**
**AEG Aktiengesellschaft Patent-und Lizenzwesen Theodor-Stern-Kai 1**
**W-6000 Frankfurt am Main 70(DE)**

(54) **Commutator assembly for a DC traction motor.**

(57) A commutator assembly including a cylindrical spider having a central elongated portion and a clamping surface at one end thereof. A plurality of elongated commutator bars form a cylindrical bar cluster having an internal cylindrical opening for receiving the central portion of the spider. Each bar has a riser portion extending radially outward from the bar. A clamping element for clamping the cluster against the clamping surface of the spider. The commutator bars each include an axial projection at one end having a shoulder axially adjacent the riser portion for abutting the clamping surface of the spider.

FIGURE 1

## COMMUTATOR ASSEMBLY FOR A DC TRACTION MOTOR

### BACKGROUND OF THE INVENTION

The present invention relates to electric motors, and more particularly to the configuration of a commutator bar in a D.C. traction motor.

DC traction motors utilize an electrical input supplied to a set of armature coils to create a magnetic field which is then utilized to produce mechanical energy in the form of a rotational torque. In order to produce this torque in a continuous rotational direction, the current supplied to the coils of the armature of the motor must be periodically reversed in synchronism with the rotation of the armature. A commutator assembly, or rotating switch, is provided to reverse the current flowing through the armature coils in synchronism with the rotation of the armature.

The commutator assembly includes a plurality of conductive bars, which are normally made of copper, interleaved with a plurality of insulator bars forming a commutator bar cluster. Each of the bars has a riser portion which extends radially outwardly from one end of the bar to provide a rotating contact point. As the cluster rotates, the bars sequentially sweep past a plurality of brushes contacting the conductive bars and supplying current for the armature coils. The cycling of the bars past the brushes achieves the coordinated current reversal necessary to maintain a constant unidirectional torque.

The conductive bars of commutator assemblies, prior to the present invention, where held in place on a shaft by a commutator spider and a retaining ring which are normally made of steel. The bars included a V-shaped cutout between the riser and an axial projection on the bar for engagement with a projection extending from the spider, and a second V-shaped cutout at the opposite end of the bar for engagement with a projection extending from the retaining ring.

This design has provided satisfactory structural integrity for a wide range of commutator applications, the strength of the bars and the mounting rings proving sufficient to avoid failure difficulties. However, in certain applications involving a severe duty cycle environment, fatigue loading from high cyclic stress can lead to cracks in the commutator bars. The cracks most often appear in the cut-out V area of the commutator bars under the riser. Once started, cracked conditions progress necessitating the replacement of commutators.

### SUMMARY OF THE INVENTION

It is an object of the present invention to provide a commutator assembly having bar elements which do not experience fatigue cracking even under severe duty cycles and high cyclic stress.

It is another object of the present invention to provide a commutator assembly having bar elements in which a point of fatigue is eliminated in high stress areas of the bar.

These and other objects of the present invention are accomplished by providing a commutator assembly including a cylindrical spider having a central elongated portion and a clamping surface at one end thereof; a plurality of elongated commutator bars for forming a cylindrical bar cluster having an internal cylindrical opening for receiving the central portion of the spider, each bar having a riser portion extending radially outwardly from the bar and an axial projection at one end having a shoulder axially adjacent, the riser portion for abutting the clamping surface of the spider; and a clamping member for clamping the cluster against the clamping surface of the spider. The bars as taught in the present invention, wherein the rearward internal V-shaped cutout of the bar near the riser of the bar is eliminated, and alternate means of retaining the commutator bar assembly in operative position are provided, eliminate the internal V, relieving a crack point of small radius in the high stress riser portion of the commutator bar.

### BRIEF DESCRIPTION OF THE DRAWINGS

Figure 1 is a perspective, sectional view of a commutator assembly according to an embodiment of the present invention.

Figure 2 is a cross-sectional view of a prior art commutator.

Figures 3A and 3B are planar views of a prior art commutator bar and a commutator bar of the present invention, respectively.

Figure 4 is a cross-sectional view illustrating a further feature of a commutator bar in accordance the invention.

### DETAILED DESCRIPTION OF PREFERRED EXEMPLARY EMBODIMENTS

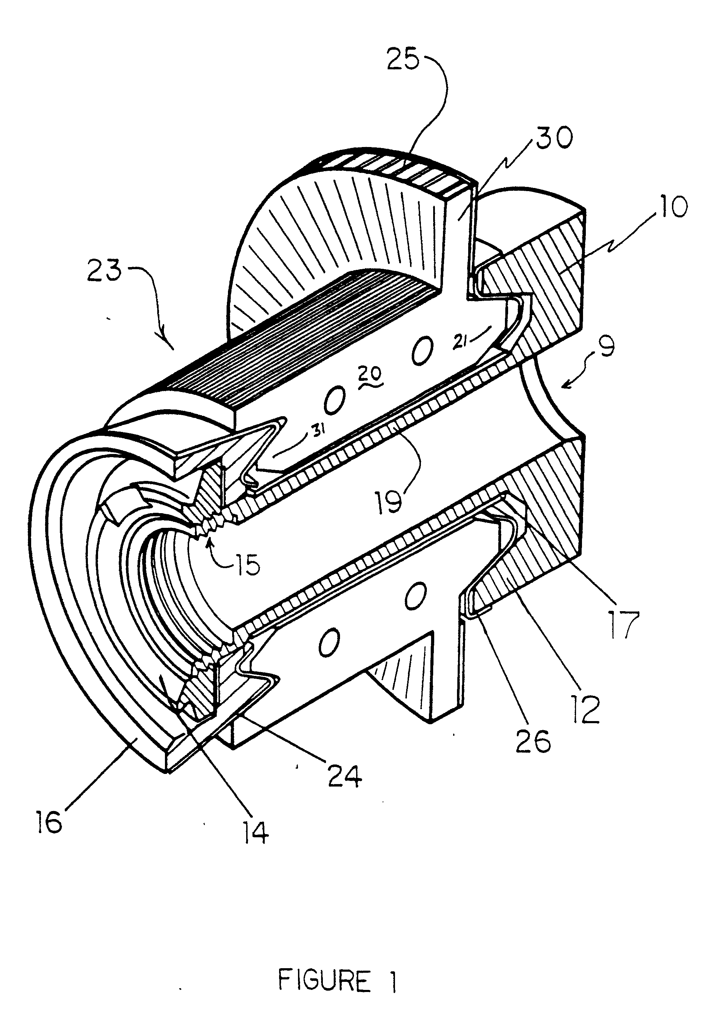

The commutator assembly illustrated in Figure 1 includes a commutator spider 10 with a central opening 9 for accommodation of a motor shaft (not illustrated). Spider 10 is provided with threads 15 at its left-hand end in Figure 1 for clamping of nut 14 to the motor shaft. A commutator bar cluster 23 formed of individual conductive commutator bars 20 and interleaved insulating bars 25, is positioned around a narrow middle section 19 of spider 10. A retaining ring 16 is positioned just inside threads 15, to secure cluster 23 to the spider 10. A nut 14 is provided to secure retaining ring 16 in place. Spider 10, cluster 23, ring 16 and nut 14 all rotate together with the motor shaft (not shown).

Mica rings 24 and 26 are provided to insulate bars 20 from spider 10 and ring 16, respectively. A mica sleeve 17 is provided to insulate bars 20 from spider 10. Mica rings 24 and 26 and sleeve 17 also rotate with the rest of the commutator assembly.

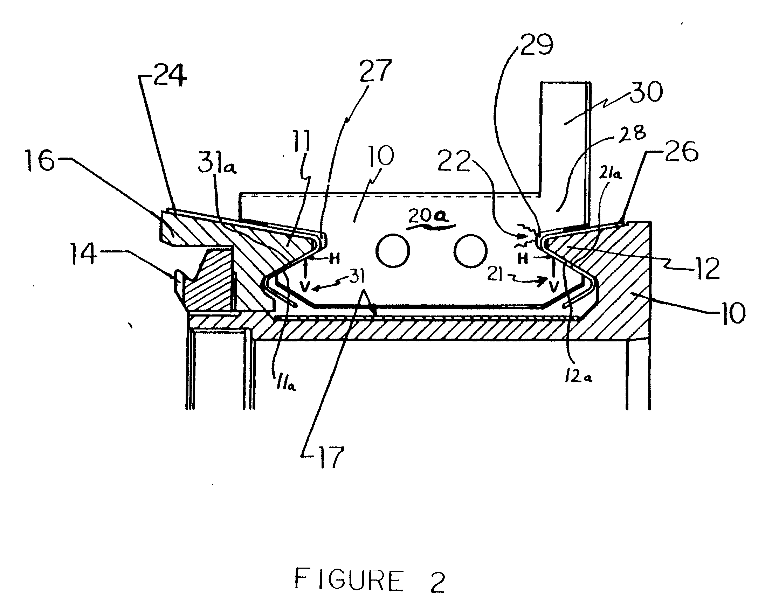

Before discussing the inventive contribution with respect to commutator bars 20 in Figure 1, reference is made to Figure 2, which illustrates a prior art commutator bar 20a.

As illustrated in Figure 2, bar 20a includes front and rear internal v-shaped notches 27 and 29, respectively. Commutator spider 10 has an integral projection 12 with a clamping surface 12a to engage rear notch 29 and ring 16 has a projection 11 with a clamping surface 11a to engage front notch 27 to hold bars 20 in place about the periphery of spider 10. Retaining ring 16 acts to clamp the cluster 23 between surfaces 11a and 12a.

As the assembly shown in Figure 2 rotates with the motor shaft, respective upper surfaces 21a and 31a of projections 21 and 31 of bars 20 bear on undersurface 12a and 11a of projections 12 and 11, respectively. The retention of rotating bars 20 can result in a high degree of stress loading on the bars. The stresses can result in the development of cracks in the area 22 in the vicinity of the rear notch 29. The cracking is concentrated in the area designated by 22 because in the prior art design of the commutator bar 20, the centrifugal force load of the riser portion 30 is applied almost solely to the rear notch 29 load point.

The riser portion 30 comprises approximately 13 percent of the total area of the bar, and the riser centrifugal force comprises 35 percent of the total centrifugal force. The result of the loading of this entire force onto the single load area 22 contributed to the resultant stress cracking, causing the fatigue failure of the bar.

The design of the prior art bars therefore presented a weak stress point which would result in fatigue cracking prematurely.

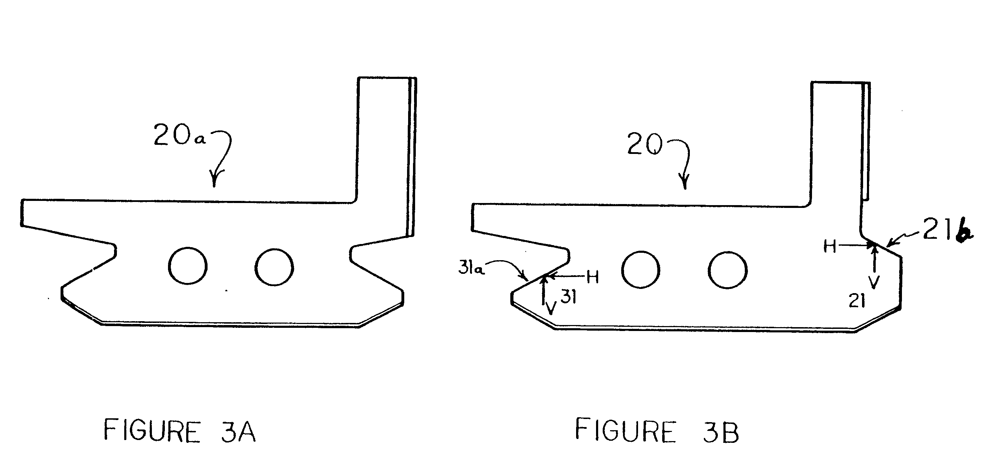

Referring again to Figure 1, and to Figure 3B, the configuration of the bars 20 of the present invention eliminates the weak fatigue area through a redesign of the rear configuration of the bar members. The small radius, sharp angled V portion upon which was concentrated a significant amount of the stress has been eliminated. The resulting bar design has a surface 21b axially adjacent riser portion 30, and thus out of radial alignment with riser portion 30, as illustrated in Figure 3B.

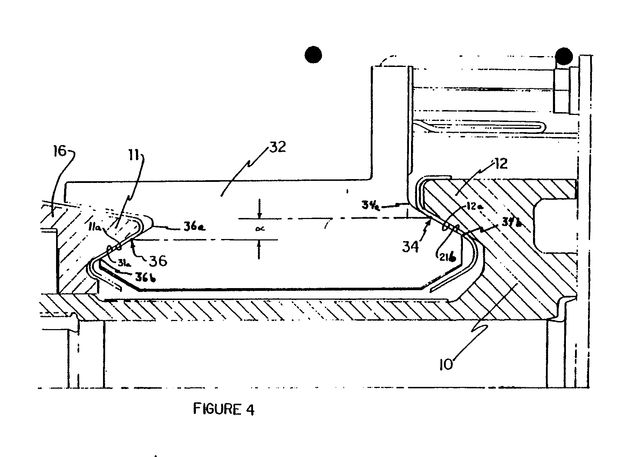

In Figures 2 and 3B, arrows V and H illustrate the forces which act on the commutator bar as a result of both the clamping of the bars between the spider 10 and ring 16 and the centrifugal force from rotation of the bar. By convention, the sum of these forces distributed across the surfaces 21a, 21b and 31a is assumed at a single point on each surface. These points are designed as stress points 34 and 36 in Figure 4. The arrows V and H are drawn by convention at the stress points on the surfaces 21b and 31a. The stress points are assumed at approximately one third of the distance along the surfaces 21b and 31a from the respective end points 34a and 36a to the respective other end points 34b and 36b. As the commutator assembly is put into rotation, the centrifugal force of the mass of the bar 20 will increase in proportion to the velocity of rotation.

When the commutator is exposed to a temperature change, the copper bars 20 will expand or contract disproportionately with respect to the steel parts such as the retaining ring 16 and spider 10 and the forces acting on the bars will therefore be altered. During the operation of a motor, the temperature inherently increases and there is a resultant increase in the magnitude of both V and H. In calculating the forces V and H which the bars will undergo during operation of the motor, the design and shape of the commutator bars must be taken into consideration, as well as the rotation speed of the motor and the resultant centrifugal force.

The present design, as illustrated in Figures 1, 3B and 4 reduces the relative loading by the riser portion 30 onto the surface 21b. Through the reshaping of the bar to eliminate rear notch 29 the relative position of the riser 30 is shifted over the main portion of the body and rear supporting extension 28 between user portion 30 and the major portion of the bar is eliminated. By reducing the stress loading, an increased life for the bar 20 without cracking is obtained.

Through elimination of notch 29 found in the prior art bar (Figures 2, 3A), the commutator bar of the present invention has an increased mass, thereby increasing the total centrifugal force of the bar. However, since the force distribution from the riser portion 30 has been significantly altered so that notch 27 now shares a portion of the load, the new bar design decreases the load concentrated on the rear load surface 21b by approximately 16 percent. This 16 percent load decrease is significant when calculating the fatigue stresses on the bar.

In Figure 4, a commutator bar 32 is illustrated in position between a commutator spider 10 and the retaining ring 16. Load point 34 rests between the bar rear surface 21b and the commutator spider 10 and load point 36 rests between the bar front surface 31a and retaining ring 16. The two load points are vertically offset by a distance α. This offset contributes to the shifting of the centrifugal forces from the rear load point 34 towards the front load point 36.

It will be understood that the above-description of the present invention is susceptible to various modifications, changes and adaptations, and the same are intended to be comprehended within the meaning and range of equivalence of the appended claims.

## Claims

1. In a commutator assembly including a cylindrical spider having a central elongated portion and a clamping surface at one end thereof; a plurality of elongated commutator bars forming a cylindrical bar cluster having an internal cylindrical opening for receiving the central portion of the spider, each bar having a riser portion extending radially outwardly from the bar; and clamping means for clamping the cluster against the clamping surface of the spider, the improvement wherein; said commutator bars each include an axial projection at one end having a shoulder axially adjacent said riser portion for abutting the clamping surface of the spider.

2. The bar of Claim 1, wherein said shoulder defines a first angled load bearing surface for abutting said clamping surface of said spider; the opposite end of each of said bars includes a second projection incorporating a second shoulder and defining a second angled load bearing surface for abutting a clamping surface of the clamping means; said first and second load bearing surfaces each have a stress point, and the stress point of said first and second load bearing surfaces are located at different radial distances from the axis of said cluster.

3. The bar of Claim 1, wherein said projection and said riser portion form an obtuse angle.

4. In a commutator assembly including a cylindrical spider having a central elongated portion and a clamping surface at one end thereof; a plurality of elongated commutator bars forming a cylindrical bar cluster having an internal cylindrical opening for receiving the central portion of the spider, each bar having a riser portion extending radially outwardly from the bar; and clamping means for clamping the cluster against the clamping surface of the spider, the improvement wherein; said commutator bars each include an axial projection at one end thereof having a shoulder for abutting the clamping surface of the spider, said shoulder and said riser portion being out of radial alignment.

5. The bar of Claim 1, wherein said shoulder defines a first load bearing surface for abutting the clamping surface of the spider; the opposite end of each of said bar includes a second projection incorporating a second shoulder and defining a second load bearing surface for abutting a clamping surface of the clamping means; said first and second load bearing surfaces each have a stress point, and the stress point of said first and second load bearing surfaces are located at different radial distances from the axis of said cluster.

6. The bar of Claim 4, wherein said projection and said riser portion form an obtuse angle.

7. In a commutator assembly including a cylindrical spider having a central elongated portion and a clamping surface at one end thereof; a plurality of elongated commutator bars forming a cylindrical bar cluster having an internal cylindrical opening for receiving the central portion of the spider, each bar having a riser portion extending radially outwardly from the bar; and clamping means for clamping the cluster against the clamping surface of the spider, the improvement wherein; said commutator bars each include an axial projection at one end for abutting the clamping surface of the spider and said riser portion is axially located between the base of the axial projection of said commutator bar and the other end of said commutator bar.

8. The bar of Claim 1, wherein said shoulder defines a first load bearing surface for abutting the clamping surface of the spider; the opposite end of each of said bars includes a second projection incorporating a second shoulder and defining a second load bearing surface for abutting a clamping surface of the clamping means; said first and second load bearing surfaces each have a stress point, and the stress point of said first and second load bearing surfaces are located at different radial distances from the axis of said cluster.

9. The bar of Claim 1, wherein said projection and said riser portion form an obtuse angle.

10. A commutator bar for incorporation into a commutator assembly for rotation about an axis and including a commutator spider and a retaining ring for retaining a plurality of commutator bars on the spider, comprising: an elongated body having a first end with a first shoulder configured for operative engagement with the spider a second end with a second shoulder configured for operative engagement with the retaining ring, and a riser portion axially adjacent said first shoulder and radially extending from a first side of said body.

11. The bar of Claim 10, wherein
said first end includes a first projection incorporating said first shoulder and defining a first load bearing surface for abutting an internal surface of a cylindrical notch in the spider;
said second end includes a second projection incorporating said second shoulder and defining a second load bearing surface for abutting an internal surface of a cylindrical notch in the retaining ring; wherein
said first and second load bearing surfaces each have a stress point, and the stress points of said first and second bearing surfaces are located at different radial distances from the axis.

12. The bar of Claim 10, wherein said first projection and said body form an obtuse angle in the area of attachment of said first projection to said body.

FIGURE 1

FIGURE 2
(PRIOR ART)

EP 0 423 614 A1

FIGURE 3A
(PRIOR ART)

FIGURE 3B

EP 0 423 614 A1

FIGURE 4

EP 0 423 614 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1451413 (J.DEMERCIERE) | 1, 4, 7 | H01R39/04 |
| Y | * page 1, lines 54 - 63; figure 2 * | 2, 3, 5, 6, 8-11 | |
| | | | |
| Y | PATENT ABSTRACTS OF JAPAN vol. 4, no. 148 (E-30)(630) 18 October 1980, & JP-A-55 100044 (FUJI DENKI SEIZO K.K.) 30 July 1980, * the whole document * | 2, 5, 8, 10, 11 | |
| Y | DE-B-1057216 (R.BOSCH) * figure 2 * | 3, 6, 9 | |
| A | PATENT ABSTRACTS OF JAPAN vol. 7, no. 27 (E-156)(1172) 03 February 1983, & JP-A-57 180350 (HITACHI SEISAKUSHO K.K.) 06 November 1982, * the whole document * | 1, 4, 7, 10 | |

TECHNICAL FIELDS
SEARCHED (Int. Cl.5 )

H01R
H02K

The present search report has been drawn up for all claims

| Place of search | Date of completion of the search | Examiner |
|---|---|---|
| BERLIN | 18 DECEMBER 1990 | LEOUFFRE, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)